# EUROPEAN PATENT SPECIFICATION

(11) **EP 3 142 135 B1**
(45) Date of publication and mention of the grant of the patent: **19.06.2019**
(21) Application number: 16182571.6
(22) Date of filing: 03.08.2016
(51) Int. Cl.: H01H 19/58, H01H 19/11, H01H 19/20

(54) **INPUT DEVICE**
EINGABEVORRICHTUNG
DISPOSITIF D'ENTRÉE

(30) Priority: 27.08.2015 JP 2015167785
(43) Date of publication of application: 15.03.2017
(73) Proprietor: Alps Alpine Co., Ltd., Tokyo 145-8501 (JP)
(72) Inventor: FUJIMURA, Shinji, Tokyo 145-8501 (JP)
(74) Representative: Schmitt-Nilson Schraud Waibel Wohlfrom Patentanwälte Partnerschaft mbB

(56) References cited:
- EP-A1- 0 414 899
- WO-A1-2014/087783
- US-A1- 2009 152 086

## Description

### CLAIM OF PRIORITY

This application claims the benefit of Japanese Patent Application No. 2015-167785 filed on August 27, 2015.

### BACKGROUND OF THE INVENTION

### 1. Field of the Invention

The present invention relates to an input device.

### 2. Description of the Related Art

Japanese Unexamined Patent Application Publication No. 2007-201415 discloses an input device in which input is performed according to a relative rotation between a plurality of members. In the input device disclosed in Japanese Unexamined Patent Application Publication No. 2007-201415, a cam for allowing a user to feel a resistance force referred to as a click feeling according to rotation is provided.

However, in the input device disclosed in Japanese Unexamined Patent Application Publication No. 2007-201415, since the resistance force generated by a cam portion is directly transmitted to a user, there is a disadvantage that the user cannot comfortably operate the input device.

EP 0 414 899 A1 discloses a rotary encoder which is small in size and free from loose shaft. To accomplish this object, a cylindrical support shaft extending from the bottom surface of a rotary encoder substrate portion fits to and supports a cylindrical operation shaft so that the length of a fitting portion of a knob and that of the cylindrical operation shaft can be elongated, therefore the height of the rotary encoder can be reduced as a whole while limiting the inclination of the knob and the looseness of the fitting portion of the rotary shaft.

US 2009/152086 A1 describes a rotating operation type electronic component comprising a rotation shaft and a signal generating section. The rotation shaft has a rod-shaped intermediate section, a cylindrical operation section, and a coupling section coupling the upper end of the intermediate section with the operation section. The rotatable operation section covers the upper part of the intermediate section, and is mounted with an operation knob.

### SUMMARY OF THE INVENTION

The present invention provides an input device by which a resistance force generated according to a relative rotation between members can be changed.

According to the present invention, there is provided an input device which includes the features of claim 1.

Accordingly since the structure of the gap can be changed by replacing the sleeve, it is possible to manufacture a plurality of kinds of input device having resistance forces different from each other while using a common structure.

Preferably, in the input device of the present invention, a distance between the first member and the second member in the gap may be greater than a distance between the first member and the second member in the bearing portion.

According to this configuration, it is possible to change the resistance force generated according to the relative rotation between the members.

Preferably, the input device of the present invention further includes a resistance generation portion configured to generate a resistance force according to a relative rotation angle between the first member and the second member, in which the viscous material may be in contact with the first member and the second member at a position different from that of the resistance generation portion.

According to this configuration, it is possible to change the resistance force generated by the resistance generation portion according to the relative rotation of the members. Since the viscous material is positioned at a position different from that of the resistance generation portion, it is possible to simplify the structure of the resistance generation portion.

Preferably, in the input device of the present invention, the other member may include a cylindrical gap formation outer surface, the sleeve holding portion may include a cylindrical holding inner surface which is positioned outside the gap formation outer surface, the sleeve may include a cylindrical holding outer surface which is in contact with the inner portion of the holding inner surface and a cylindrical gap formation inner surface which is positioned outside the gap formation outer surface, and the gap may be formed between the gap formation outer surface and the gap formation inner surface.

According to this configuration, since the sleeve has an approximately cylindrical shape, it is possible to simply change an extendable region of the gap between the gap formation outer surface and the gap formation inner surface by changing only the length of the sleeve.

### BRIEF DESCRIPTION OF THE DRAWINGS

Fig. 1 is a perspective view of an input device according to an embodiment of the present invention;
Fig. 2 is an exploded perspective view of the input device shown in Fig. 1;
Fig. 3A is a perspective view of a base portion shown in Fig. 2;
Fig. 3B is a bottom view of a partition plate shown in Fig. 2;
Fig. 4A is a perspective view of a cover shown in Fig. 2 when viewed obliquely from the top;
Fig. 4B is a perspective view of the cover shown in Fig. 2 when viewed obliquely from the bottom;
Fig. 5A is a perspective view of a sleeve shown in Fig. 2;
Fig. 5B is a perspective view of the cover and the sleeve shown in Fig. 2 when viewed obliquely from the bottom;
Fig. 6A is a perspective view of a rotary member shown in Fig. 2 when viewed obliquely from the top;
Fig. 6B is a perspective view of the rotary member shown in Fig. 2 when viewed obliquely from the bottom;
Fig. 7 is a sectional view taken along line 7-7 of the input device shown in Fig. 1;
Fig. 8 is a sectional view taken along line 8-8 of the input device shown in Fig. 7;
Fig. 9 is a graph showing a relationship between a rotation angle and a resistance force; and
Fig. 10 is a sectional view of an input device of a modification example.

### DESCRIPTION OF THE PREFERRED EMBODIMENTS

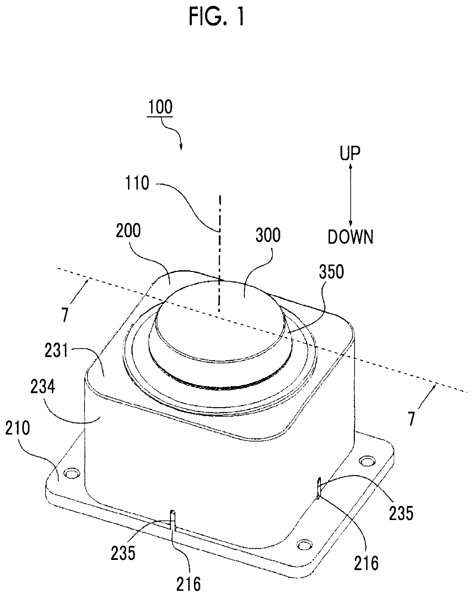

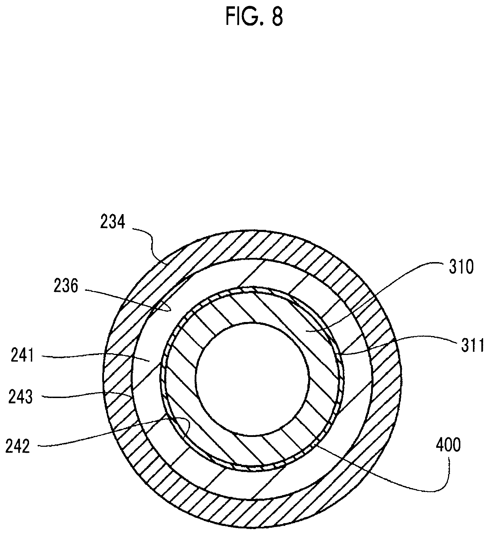

Hereinafter, an input device according to an embodiment of the present invention will be described. As shown in a perspective view of Fig. 1, the input device 100 includes a fixed member 200 and a rotary member 300 which can rotate in both directions relative to each other about a rotation axis 110 along a vertical direction, and includes a viscous material 400 described below with reference to Fig. 8. The fixed member 200 of the present embodiment is fixed to a vehicle, and the rotary member 300 is operated by fingers of a user who performs input. The input based on rotation is transmitted to the outside as electric signals by a wire (not shown).

In addition, the vertical direction is defined for convenience of descriptions, and does not define a direction in an actual use. A direction which passes the rotation axis 110 so as to be orthogonal to the rotation axis 110 is referred to as a radial direction. A radially outward direction is referred to as a direction away from the rotation axis 110, and a radially inward direction is referred to as a direction toward the rotation axis 110. Regardless of presence or absence of "approximately", a shape used in the following description does not strictly limit each component to a geometric shape, and is suggested so as to exemplify a schematic shape as an example which realizes a technical idea of the present embodiment.

### Fixed Member

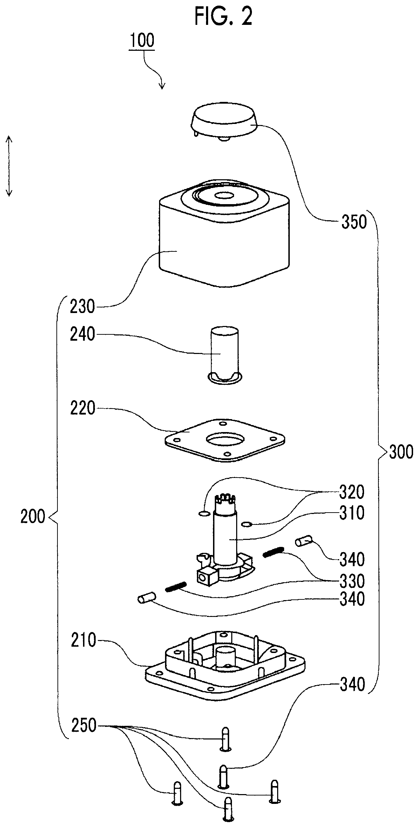

First, the structure of the fixed member 200 will be described. As shown in an exploded perspective view of Fig. 2, the fixed member 200 includes a base portion 210, a partition plate 220, a cover 230, a sleeve 240, and screws 250. The components of the fixed member 200 are fixed to each other such that the components do not rotate to each other around the rotation axis 110.

### Base Portion

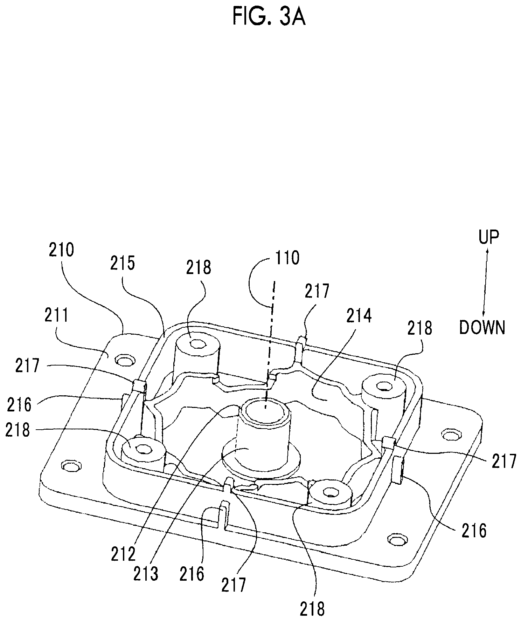

As shown in the perspective view of Fig. 3A, the base portion 210 includes a seat portion 211, a first bearing portion 212, a cam portion 214, a first wall portion, 215, outer ribs 216, upper ribs 217, and lower bosses 218.

The seat portion 211 extends in a plate shape along a plane orthogonal to the rotation axis 110. The first bearing portion 212 protrudes approximately cylindrically upward from the upper surface of the seat portion 211 along the rotation axis 110. A first bearing surface 213 which is a cylindrical outer surface of the first bearing portion 212 extends along the rotation axis 110 with the rotation axis 110 as a center. A hole which penetrates the first bearing portion 212 and the seat portion 211 in the vertical direction is provided at the center of the first bearing portion 212. The cam portion 214 extends in a plate shape upward from the seat portion 211. The cam portion 214 surrounds the first bearing portion 212 from the outside in the radial direction. Distances between the cam portion 214 and the outer surface of the first bearing portion 212 are different from each other according to the angle position around the rotation axis 110.

The first wall portion 215 extends upward from the seat portion 211 so as to surround the cam portion 214 from the outside in the radial direction. When the first wall portion 215 is viewed from the top toward the bottom, the first wall portion 215 has an approximately rectangular shape. The outer ribs 216 extends upward to a lower position than the uppermost portion of the first wall portion 215 from the seat portion 211 along the outer surface of the first wall portion 215. When the outer ribs 216 are viewed from the top toward the bottom, each of the outer ribs 216 protrudes toward the outside in the radial direction from the outer surface of the first wall portion 215 in the vicinity of the center of each of four sides of the first wall portion 215 having an approximately rectangular shape. The upper ribs 217 extend upward from the upper edge of the first wall portion 215. When the upper ribs 217 are viewed from the top toward the bottom, each of the upper ribs 217 is positioned in the vicinity of the center of each of the four sides of the first wall portion 215 having an approximately rectangular shape. Four lower bosses 218 are provided so as to be close to corners of the first wall portion 215 having an approximately rectangular shape between the cam portion 214 and the first wall portion 215. Each of the four lower bosses 218 protrudes upward from the seat portion 211. A screw hole which penetrates each of the lower bosses 218 and the seat portion 211 is provided at the center of each lower boss 218.

### Partition Portion

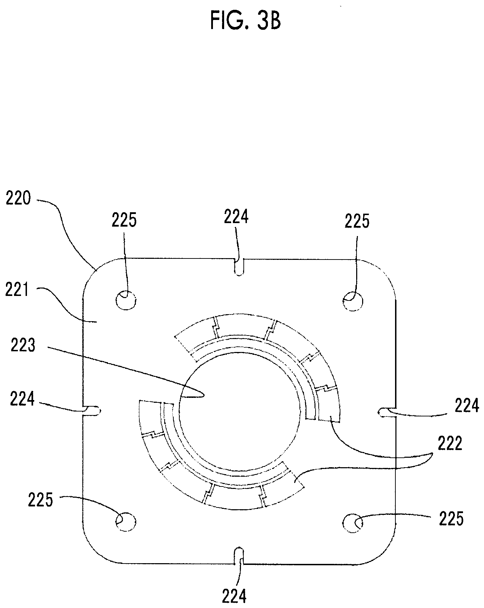

As shown in a bottom view of Fig. 3B, the partition plate 220 includes a plate-shaped member 221 having an approximately rectangular shape and fixed terminals 222. A circular center hole 223 having a center which coincides with the rotation axis 110 is provided in the plate-shaped member 221. The center hole 223 penetrates the plate-shaped member 221 vertically.

A notch 224 which is recessed toward the inside in the radial direction is provided in the vicinity of the center of each of four linear outer edges of the plate-shaped member 221 having an approximately rectangular shape. Four through holes 225, which overlap the four lower bosses 218 of Fig. 3A in the vertical direction, are provided in the vicinities of the four corners of the plate-shaped member 221 so as to penetrate the plate-shaped member 221 in the vertical direction. The fixed terminals 222 are a plurality of thin sheet-shaped metal pieces which are provided on the lower surface of the plate-shaped member 221, and are disposed in a fan shape outside the center hole 223 in the radial direction.

When viewed from the top toward the bottom, the outer edge positioned outside the partition plate 220 in the radial direction shown in Fig. 3B approximately coincides with the outer edge positioned outside the first wall portion 215 in the radial direction shown in Fig. 3A. Since the upper ribs 217 of the base portion 210 are fitted into the notches 224 of the partition plate 220, a relative rotation between the partition plate 220 and the base portion 210 is prevented.

### Cover

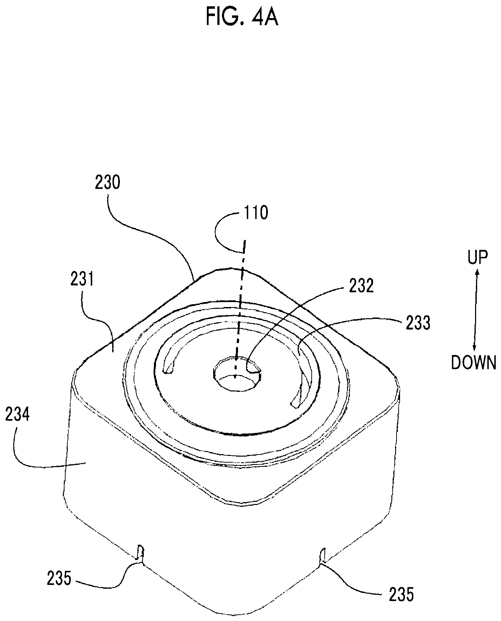

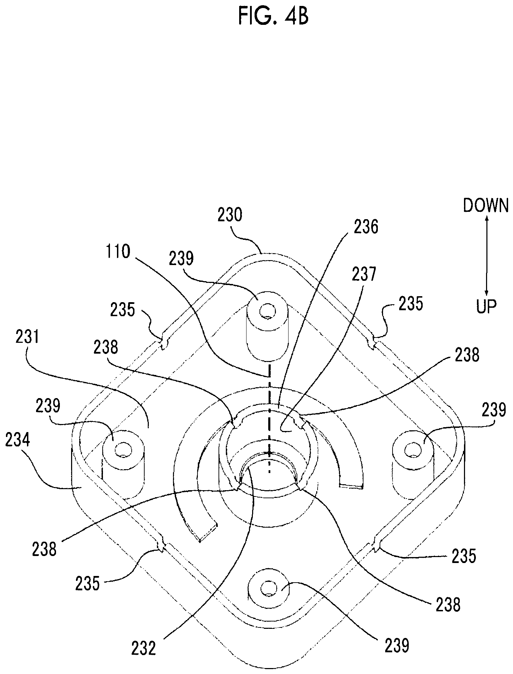

As shown in a perspective view of Fig. 4A which is a view when the cover 230 is obliquely viewed from the top, the outline of the cover 230 is an approximately rectangular parallelepiped shape, and the cover 230 defines a hollow internal space. As shown in a perspective view of Fig. 4B which is a view when the cover 230 is obliquely viewed from the bottom, the cover 230 is open downward.

As shown in Fig. 4A, the cover 230 includes an upper plate 231 which extends substantially along a plane approximately orthogonal to the rotation axis 110. The upper plate 231 has an approximately rectangular shape when viewed from the top toward the bottom. The upper plate 231 gently protrudes upward in the vicinity of the center thereof . A columnar second bearing surface 232 having a center axis along the rotation axis 110 is provided at the center of the upper plate 231. The second bearing surface 232 defines a hole which penetrates the upper plate 231 in the vertical direction. In the upper plate 231, a groove 233 which is open upward is provided further outside in the radial direction than the second bearing surface 232. The groove 233 extends such that the groove 233 does not completely surround the rotation axis 110 along a circumference of a circle which has the rotation axis 110 as a center.

As shown in Fig. 4B, the cover 230 includes a plate-shaped second wall portion 234 which extends downward from the outer edge of the upper plate 231. In the lower edge of the second wall portion 234 having an approximately rectangular shape when viewed from the bottom toward the top, a notch 235 which is recessed upward is provided at the center of each side.

The cover 230 includes a sleeve holding portion 236. The sleeve holding portion 236 has an approximately cylindrical shape, and extends downward in a cylindrical shape from the lower surface of the upper plate 231 outside the lower end of the second bearing surface 232 in the radial direction. A cylindrical holding inner surface 237 of the sleeve holding portion 236 has an approximately cylindrical shape, and has a center axis which coincides with the rotation axis 110. The cross section of the holding inner surface 237 on the plane orthogonal to the rotation axis 110 is approximately constant along the rotation axis 110. The upper end of the space defined inside the holding inner surface 237 communicates with the space defined inside the second bearing surface 232. Notches 238, which are disposed at 90° intervals with the rotation axis 110 as a center when viewed from the bottom toward the top and are recessed upward, are provided on the lower end of the sleeve holding portion 236.

The cover 230 includes four upper bosses 239. The four upper bosses 239 are disposed between the second wall portion 234 and the sleeve holding portion 236, and are close to the corners of the second wall portion 234 having an approximately rectangular shape. Each of the four upper bosses 239 protrudes downward from the upper plate 231, and includes a screw hole which is open downward.

The second wall portion 234 of the cover 230 (Fig. 4B) is disposed so as to surround the outer side of the first wall portion 215 of the base portion 210 (Fig. 3A) in the radial direction. As shown in Fig. 1, since the four outer ribs 216 of the base portion 210 are respectively fitted into the four notches 235 of the cover 230, a relative rotation between the cover 230 and the base portion 210 is prevented. The base portion 210, the partition plate 220, and the cover 230 shown in Fig. 2 are fixed to each other at four locations by screws 250 (Fig. 2) which pass through the lower bosses 218 of the base portion 210 (Fig. 3A), the through holes 225 of the partition plate 220 (Fig. 3B), and the upper bosses 239 of the cover 230 (Fig. 4B).

### Sleeve

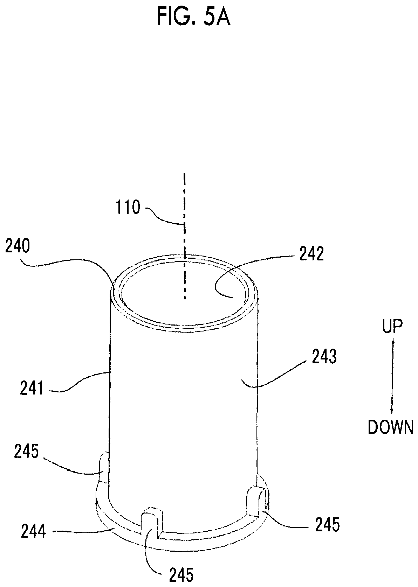

As shown in a perspective view of Fig. 5A, the sleeve 240 includes a control cylinder 241. The control cylinder 241 includes a gap formation inner surface 242 and a holding outer surface 243 which extend cylindrically from the upper end to the lower end with the rotation axis 110 as a center. The gap formation inner surface 242 faces the inside in the radial direction, and the holding outer surface 243 faces the outside in the radial direction. Each of the cross sections of the gap formation inner surface 242 and the holding outer surface 243 on the plane orthogonal to the rotation axis 110 is constant along the rotation axis 110. The internal space defined by the gap formation inner surface 242 vertically penetrates the sleeve 240.

The sleeve 240 includes a flange 244 and four ribs 245. The flange 244 annularly protrudes toward the outside in the radial direction from the lower end of the control cylinder 241. The ribs 245 protrude upward from the upper surface of the flange 244 along the holding outer surface 243. The ribs 245 are disposed at 90° intervals with the rotation axis 110 as a center when viewed from the top toward the bottom.

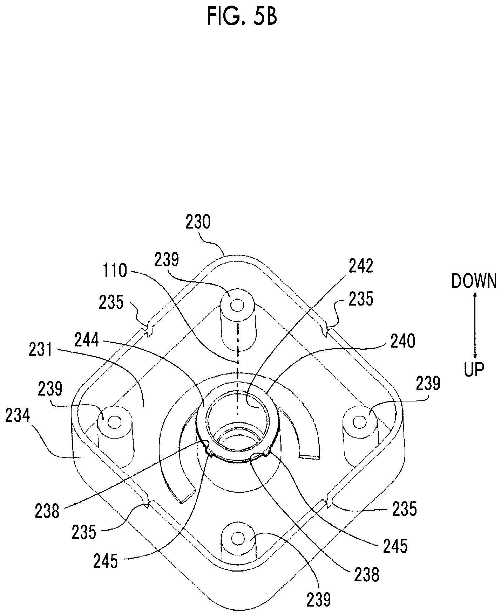

Fig. 5B is a perspective view showing the cover 230 and the sleeve 240 which are combined to each other. The sleeve 240 is disposed in the space inside the holding inner surface 237 (Fig. 4B) of the sleeve holding portion 236. Since the cylindrical holding outer surface 243 (Fig. 5A) of the sleeve 240 and the cylindrical holding inner surface 237 (Fig. 4B) of the cover 230 are in contact with each other with a large area, the sleeve 240 does not move vertically in the sleeve holding portion 236 as long as a large force is not applied. Since each of the ribs 245 of the sleeve 240 is fitted into the notch 238 of the cover 230, the sleeve 240 and the sleeve holding portion 236 do not rotate relative to each other.

### Rotary Member

Next, the structure of the rotary member 300 will be described. As shown in the exploded perspective view of Fig. 2, the rotary member 300 includes a main body portion 310, movable terminals 320, springs 330, abutment members 340, a head 350, and a screw 360. The components of the rotary member 300 are fixed to each other such that the components do not rotate to each other around the rotation axis 110.

### Main Body Portion

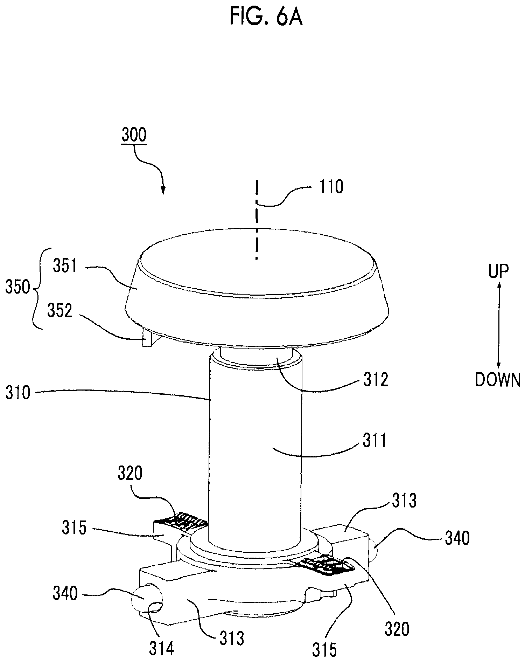

As shown in a perspective view of Fig. 6A which is a view when the main body portion 310 is obliquely viewed from the top, the main body portion 310 had a cylindrical gap formation outer surface 311 which extends along the rotation axis 110 with the rotation axis 110 as a center. The main body portion 310 includes a third cylindrical bearing surface 312 which extends along the rotation axis 110 from the vicinity of the upper end of the gap formation outer surface 311 with the rotation axis 110 as a center. In the plane orthogonal to the rotation axis 110, the radius of the third bearing surface 312 is smaller than the radius of the gap formation outer surface 311.

The main body portion 310 includes two spring holding portions 313 which protrude from the vicinity of the lower end of the gap formation outer surface 311 toward the outside in the radial direction. The two spring holding portions 313 protrude in directions opposite to each other with the rotation axis 110 as a center. A spring accommodation hole 314 which is open toward the outside in the radial direction is provided in each spring holding portion 313.

The spring accommodation hole 314 extends in the radial direction inside the spring holding portion 313. The abutment member 340 is accommodated in each spring accommodation hole 314 . The abutment member 340 is a hollow rod-shaped member extends in the radial direction. The outer end portion of the abutment member 340 in the radial direction is closed, and has a round shape . The inner end portion of the abutment member 340 in the radial direction is open.

The outer end portion of the spring 330 (Fig. 2) in the radial direction is disposed inside the abutment member 340, and the inner end portion of the spring 330 in the radial direction is fixed to the spring holding portion 313 in the rear portion of the spring accommodation hole 314. The abutment members 340 are accommodated in a state where compressive forces are applied to the springs 330 (Fig. 2) along the radial direction. Accordingly, the springs 330 (Fig. 2) elastically bias the abutment members 340 toward the outside in the radial direction.

The main body portion 310 includes two terminal holding portions 315 which protrude from the vicinity of the lower end of the gap formation outer surface 311 toward the outside in the radial direction. The two terminal holding portions 315 protrude in directions opposite to each other with the rotation axis 110 as a center. When viewed from the top toward the bottom, the terminal holding portions 315 and the spring holding portions 313 are disposed at positions which are deviated by 90° with the rotation axis 110 as a center. The movable terminal 320 is attached to the upper surface of each terminal holding portion 315.

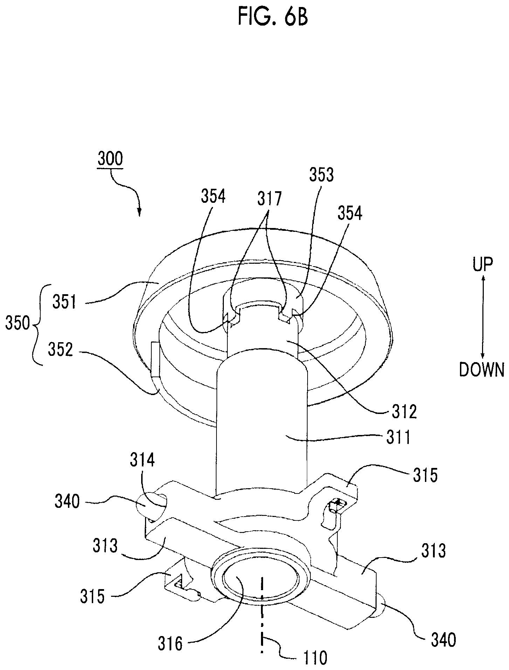

As shown in a perspective view of Fig. 6B which is a view when the main body portion 310 is obliquely viewed from the bottom, the main body portion 310 includes a fourth bearing surface 316 which is disposed below the spring holding portions 313 and the terminal holing portions 315 and is open downward. The fourth bearing surface 316 is an approximately cylindrical surface which extends along the rotation axis 110 with the rotation axis 110 as a center. The fourth bearing surface 316 extends from the lower end of the main body portion 310 to a predetermined height. The fourth bearing surface 316 defines an internal space which faces the inside in the radial direction and has a hollow cylindrical shape.

Notches 317, which are recessed toward the inside in the radial direction, slightly extend downward from the upper end on the upper end portion of the main body portion 310.

### Head

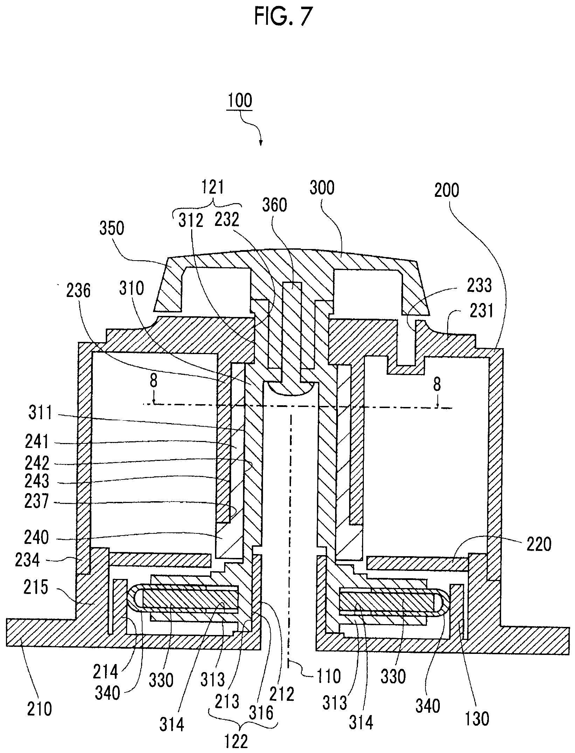

As shown in Fig. 6B, the head 350 includes an operation portion 351, a regulation member 352, and an attachment portion 353. The operation portion 351 includes a disk-shaped member which has the rotation axis 110 as a center, and an edge portion which extend downward from the outer edge of the disk-shaped member. The regulation member 352 protrudes downward from the lower end of the edge portion of the operation portion 351. The attachment portion 353 cylindrically protrudes downward from the lower surface at the center of the operation portion 351. As shown in Fig. 7 described below, a portion of the attachment portion 353 is disposed inside the upper end of the main body portion 310, and is fixed to the main body portion 310 by the screw 360. As shown in Fig. 6B, ribs 354 are provided on the outer surface of the attachment portion 353 in the radial direction. Since the ribs 354 of the head 350 are fitted so as to be fixed to the notches 317 of the main body portion 310, the head 350 does not rotate relative to the main body portion 310.

### Internal Structure

Fig. 7 is a view when the cross section taken along line 7-7 shown in Fig. 1 on the plane including the rotation axis 110 is viewed from an arrow direction. In Fig. 7, only the cross section is shown, and the inner structure is omitted.

The operation portion 351 of the head 350 is disposed outside the fixed member 200. The regulation member 352 shown in Fig. 6B is disposed so as to be movable inside the groove 233 shown in Fig. 4A. When the head 350 is operated by hands of a user and rotates around the rotation axis 110, since the regulation member 352 rotates within only the range in which the groove 233 is positioned, the rotation angle between the fixed member 200 and the rotary member 300 is limited.

In the upper portion, the second bearing surface 232 of the fixed member 200 and the third bearing surface 312 of the rotary member 300 forms an upper bearing portion 121. Both of the second bearing surface 232 and the third bearing surface 312 have approximately cylindrical shapes, and approach each other. A first distance in the radial direction between the second bearing surface 232 and the third bearing surface 312 is extremely small. The first distance is small such that the fixed member 200 and the rotary member 300 are not largely deviated from each other in the radial direction. However, the second bearing surface 232 and the third bearing surface 312 are supported to each other such that the fixed member 200 and the rotary member 300 can smoothly rotate relative to each other according to the operation of the operation portion 351.

In the lower portion, the first bearing surface 213 of the fixed member 200 and the fourth bearing surface 316 of the rotary member 300 form a lower bearing portion 122. Both of the first bearing surface 213 and the fourth bearing surface 316 have approximately cylindrical shapes, and approach each other. A second distance in the radial direction between the first bearing surface 213 and the fourth bearing surface 316 is extremely small. The second distance is small such that the fixed member 200 and the rotary member 300 are not largely deviated from each other in the radial direction. However, the first bearing surface 213 and the fourth bearing surface 316 are supported to each other such that the fixed member 200 and the rotary member 300 can smoothly rotate relative to each other according to the operation of the operation portion 351.

The control cylinder 241 of the sleeve 240 is fitted into the internal space defined by the holding inner surface 237 of the sleeve holding portion 236 of the fixed member 200. The holding inner surface 237 and the holding outer surface 243 of the sleeve 240 face each other and are in close-contact with each other. The gap formation inner surface 242 of the sleeve 240 and the gap formation outer surface 311 of the main body portion 310 of the rotary member 300 are disposed to face each other.

Fig. 8 is a view when only a cross section taken along line 8-8 of Fig. 7 is viewed from the top toward the bottom. The viscous material 400 is interposed in a gap between the gap formation inner surface 242 and the gap formation outer surface 311. The viscous material 400 may completely fill the gap between the gap formation inner surface 242 and the gap formation outer surface 311, or may fill a portion of the gap. The viscous material 400 generates a resistance force when the fixed member 200 and the rotary member 300 rotate relative to each other. For example, after at least one of the gap formation inner surface 242 and the gap formation outer surface 311 is coated with the viscous material 400, assembly is performed.

A third distance of the gap between the gap formation inner surface 242 and the gap formation outer surface 311 in the radial direction is approximately constant within a predetermined range along the rotation axis 110. The third distance is larger than the first distance of the upper bearing portion 121 and the second distance of the lower bearing portion 122. The third distance is small such that the viscous material 400 does not easily flow out. For example, each of the first distance and the second distance is 0.05 mm or less. However, the first and second distances are not limited to this. The third distance is approximately 0.1 to 0.5 mm. However, the third distance is not limited to this. Preferably, the third distance is 10 times each of the first distance and the second distance.

In the present embodiment, a member is not provided, which prevents the viscous material 400 from leaking from the gap between the gap formation inner surface 242 and the gap formation outer surface 311. If the gap between the gap formation inner surface 242 and the gap formation outer surface 311 and viscosity of the viscous material 400 are appropriately selected, leakage of the viscous material 400 which influences the operations does not occur even when it is used for a long time. For example, as the viscous material 400, grease or silicone grease can be appropriately used, in which a fluororesin such as polytetrafluoroethylene (PTFE) is included in olefin based oil.

As shown in Fig. 7, a resistance generation portion 130 is configured by the spring holding portions 313, the springs 330, the abutment members 340, and the cam portion 214. By springs 330 which are accommodated in the lower spring accommodation holes 314, the abutment members 340 are elastically biased toward the cam portion 214. The distance between the inner surface of the cam portion 214 facing the inner side in the radial direction and the rotation axis 110 is changed according to the angle position around the rotation axis 110. When the fixed member 200 and the rotary member 300 rotate relative to each other, the outer end portions of the abutment members 340 in the radial direction move in the radial direction according to the distance between the inner surface of the cam portion 214 and the rotation axis 110.

The fixed terminals 222 of the partition plate 220 shown in Fig. 3B are disposed on the rotation trajectories of the movable terminals 320 shown in Fig. 6A. The fixed terminals 222 and the movable terminals 320 come into contact with each other or are separated from each other according to the position of the relative rotation between the fixed member 200 and the rotary member 300. Electric signals generated due to the contacts between the fixed terminals 222 and the movable terminals 320 are transmitted to the outside as inputs by wires (not shown).

### Operation

If a user operates the operation portion 351 of the head 350, the fixed member 200 and the rotary member 300 shown in Fig. 7 rotate relative to each other around the rotation axis 110. At the time of the rotation, the outer end portions of the abutment members 340 move along the inner surface of the cam portion 214.

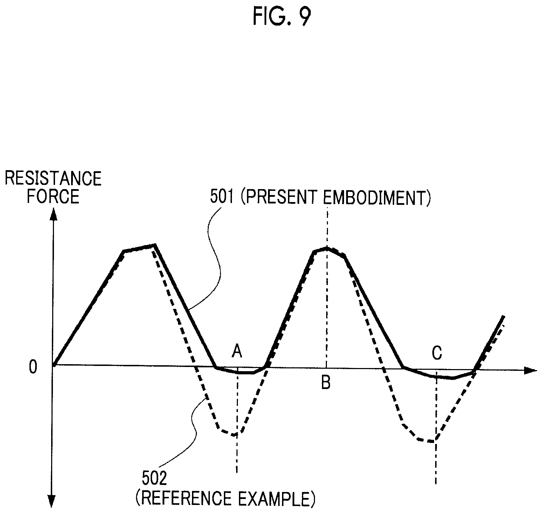

Fig. 9 is a graph in which a horizontal axis indicates an angle position of the rotary member 300 with respect to the fixed member 200 and a vertical axis indicates a resistance force applied to the operation portion 351. When a user rotates the rotary member 300 in a direction, as the resistance force in the direction opposite to the rotation direction increases, the graph is plotted further upward in the vertical axis.

When viewed locally, two positions among the angle positions of the inner surface of the cam portion 214 farthest from the rotation axis 110 are indicated by position A and position C. When viewed locally, one position among the angle positions of the inner surface of the cam portion 214 closest from the rotation axis 110 is indicated by position B. A solid line graph 501 shows an example of a case where the viscous material 400 is used as the present embodiment, and a dotted line graph 502 shows Reference Example of a case where the viscous material 400 is not used.

When the rotary member rotates from the position A to the position B, the abutment members 340 are pressed toward the inside in the radial direction by the cam portion 214, and the resistance force, which is applied from the cam portion 214 to the abutment members 340 in the direction opposite to the rotation direction, increases. Since the rotary member 300 integrally moves, the resistance force is transmitted from the abutment members 340 to the operation portion 351, and as shown by the graph 501 of the present embodiment in Fig. 9, a user feels the maximum resistance force opposite to the rotation direction at the position B.

When the rotary member rotates from the position B to the position C, the abutment members 340 are pressed toward the outside in the radial direction by the forces of the springs 330 and receive forces in the same direction as the rotation direction from the cam portion 214, and the resistance force applied from the cam portion 214 to the abutment members 340 gradually decreases. As a result, as shown in the graph 502 of Reference Example, if the viscous material 400 is not present, a user feels a force by which fingers of the user are pulled in the rotation direction, as shown by a portion in which the resistance force becomes 0 or less before and after the position C beyond the position B. Meanwhile, in the graph 501 of the present embodiment, since the viscous material 400 is provided, the force b by which fingers of the user are pulled in the rotation direction is decreased by influences of viscous resistance of the viscous material 400, and the user does not feel an abrupt change. Accordingly, it is possible to provide smooth operation feeling to a user.

According to the present embodiment, the resistance force generated by the relative rotation between the fixed member 200 and the rotary member 300 is not transmitted to a user as it is. That is, after the resistance force is changed by the viscous material 400, it is possible to transmit the changed resistance force to the user. According to the present embodiment, since the input device 100 includes the viscous material 400, it is possible to reduce the abrupt change of the resistance force generated by the resistance generation portion 130, and as a result, it is possible to provide smooth operation feeling to a user.

In addition, in the present embodiment, the upper bearing portion 121 and the lower bearing portion 122 are not coated with the viscous material 400. Moreover, the portion between the abutment members 340 and the cam portion 214 of the resistance generation portion 130 is not coated with the viscous material 400. That is, since the viscous material 400 is positioned at the position different from that of the resistance generation portion 130, it is possible to simplify the structure of the resistance generation portion 130. In a case where the viscous material 400 is present in the resistance generation portion 130, a large sealing mechanism for holding the viscous material 400 is required. However, according to the present embodiment, a large sealing mechanism is not required. In the case where the viscous material 400 is present in the resistance generation portion 130, large amounts of viscous materials 400 are required. However, according to the present embodiment, since the coating of the viscous material 400 is thinly applied, compared to the case where the viscous material 400 is present in the resistance generation portion 130, the amount of the required viscous material 400 decreases. According to the present embodiment, since surface tension is generated by applying only thin coating of the viscous material 400 and it is possible to prevent the viscous material 400 from leaking out due to the surface tension, for example, a leakage preventing structure is not required, which is required in a case where the resistance generation portion 130 is embedded into the viscous material 400.

### Modification Example

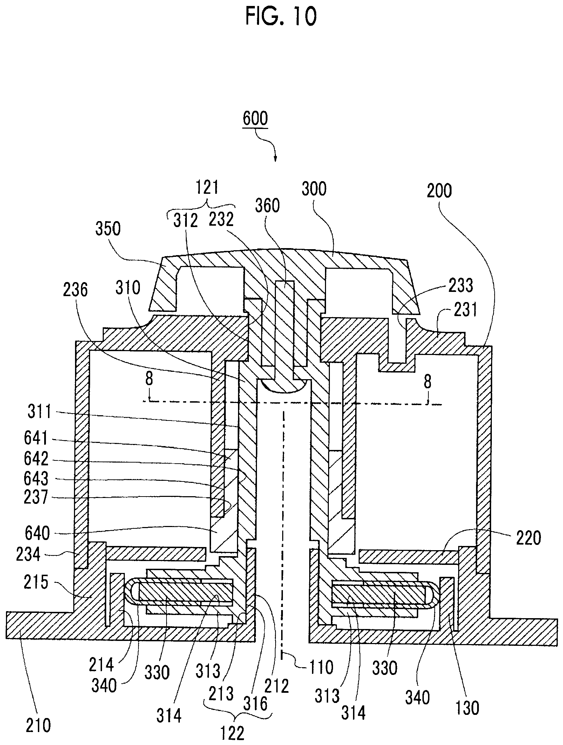

An input device 600 of Fig. 10 is a modification example of the input device 100 shown in Fig. 7. The input device 600 of the modification example includes a sleeve 640 instead of the sleeve 240 of Fig. 7. The sleeve 640 of the modification example has a structure in which the control cylinder 241 of the sleeve 240 of Fig. 7 is shortened in the vertical direction, and other structures are similar to those of the sleeve 240 of Fig. 7.

A gap formation inner surface 642 of a control cylinder 641 of the modification example is shorter than the gap formation inner surface 242 of Fig. 7 in the vertical direction, and a holding outer surface 643 of the control cylinder 641 of the modification example is shorter than the holding outer surface 243 of Fig. 7 in the vertical direction. Since a length of the gap formed between the gap formation inner surface 642 and the gap formation outer surface 311 of the rotary member 300 in the vertical direction in the modification example is shorter than that of Fig. 7, compared to the case of Fig. 7, the amount of the viscous material 400 decreases.

According to the embodiment and the modification example, since the sleeve 640 and the sleeve 240 have approximately cylindrical shapes, it is possible to simply change the region in which the viscous material 400 is present by only changing the lengths of the sleeve 640 and the sleeve 240. The resistance force felt by a user is changed according to the amount of the viscous material 400, and as the amount of the viscous material 400 decreases, a user is more difficult to feel the resistance force generated by the viscous material 400. Accordingly, as the sleeve 640 is shortened, a user more easily feels the resistance force generated by the resistance generation portion 130 directly. That is, suppression with respect to the abrupt change of the resistance force generated by the resistance generation portion 130 according to the rotation can be controlled by selecting the length of the sleeve 640. Meanwhile, in various input devices in which the resistance forces felt by a user are different from each other, other structures except for the sleeve 640 can be used in common. Accordingly, according to the present embodiment, it is possible to easily manufacture the input devices, in which the resistance forces felt by a user are different from each other, using common members. Since the sleeve 640 and the sleeve 240 can be put in and out from the lower end of the sleeve holding portion 236, manufacturing and replacement are easily performed.

The present invention is not limited to the above-described embodiment and modification example. That is, a person skilled in the art may apply various modifications, combinations, sub-combinations, and replacements to the components of the above-described embodiment and modification example within a technical scope of the present invention and an equivalent range thereof.

The present invention can be applied to the input device which is mounted on a vehicle or the like and performs input.

It should be understood by those skilled in the art that various modifications, combinations, sub-combinations and alterations may occur depending on design requirements and other factors insofar as they are within the scope of the appended claims.

## Claims

1. An input device (100) which includes a first member (200) and a second member (300) and which is configured to perform input according to a relative rotation between the first member (200) and the second member (300), comprising:
a bearing portion (121, 122) configured to rotatably support the first member (200) and the second member (300);
a gap which is formed between the first member (200) and the second member (300) at a position different from that of the bearing portion (121, 122); and
a viscous material (400) which is present in the gap and is in contact with the first member (200) and the second member (300),
**characterized in that** one of the first member (200) and the second member (300) includes a sleeve (240, 640) and a sleeve holding portion (236) configured to hold the sleeve (240, 640), and
wherein the other of the first member (200) and the second member (300), and the sleeve (240, 640) form the gap.

2. The input device (100) according to claim 1, wherein a distance between the first member (200) and the second member (300) in the gap is greater than a distance between the first member (200) and the second member (300) in the bearing portion (121, 122).

3. The input device (100) according to any one of claims 1 or 2, further comprising:
a resistance generation portion (130) configured to generate a resistance force according to a relative rotation angle between the first member (200) and the second member (300),
wherein the viscous material (400) is in contact with the first member (200) and the second member (300) at a position different from that of the resistance generation portion (130).

4. The input device (100) according to any one of claims 1 to 3,
wherein the other of the first member (200) and the second member (300) includes a cylindrical gap formation outer surface (311),
wherein the sleeve holding portion (236) includes a cylindrical holding inner surface (237) which is positioned outside the gap formation outer surface (311),
wherein the sleeve (240, 640) includes a cylindrical holding outer surface (243) which is in contact with the inner portion of the holding inner surface (237) and a cylindrical gap formation inner surface (642) which is positioned outside the gap formation outer surface (311), and
wherein the gap is formed between the gap formation outer surface (311) and the gap formation inner surface (642).

## Patentansprüche

1. Eingabevorrichtung (100), die ein erstes Element (200) und ein zweites Element (300) aufweist und die dazu ausgebildet ist, eine Eingabe in Abhängigkeit von einer relativen Drehung zwischen dem ersten Element (200) und dem zweiten Element (300) vorzunehmen, aufweisend:
einen Lagerbereich (121, 122), der dazu ausgebildet ist, das erste Element (200) und das zweite Element (300) drehbar zu lagern;
einen Spalt, der zwischen dem ersten Element (200) und dem zweiten Element (300) an einer Position gebildet ist, die von der des Lagerbereichs (121, 122) verschieden ist; und
ein viskoses Material (400), das in dem Spalt vorhanden ist und mit dem ersten Element (200) und dem zweiten Element (300) in Kontakt steht,
**dadurch gekennzeichnet, dass** eines von dem ersten Element (200) und dem zweiten Element (300) eine Hülse (240, 640) und einen Hülsenhaltebereich (236) aufweist, der zum Halten der Hülse (240, 640) ausgebildet ist,
und
wobei das andere von dem ersten Element (200) und dem zweiten Element (300) und die Hülse (240, 640) den Spalt bilden.

2. Eingabevorrichtung (100) nach Anspruch 1,
wobei ein Abstand zwischen dem ersten Element (200) und dem zweiten Element (300) in dem Spalt größer ist als ein Abstand zwischen dem ersten Element (200) und dem zweiten Element (300) in dem Lagerbereich (121, 122).

3. Eingabevorrichtung (100) nach Anspruch 1 oder 2,
die ferner einen Widerstandserzeugungsbereich (130) aufweist, der dazu ausgebildet ist, eine Widerstandskraft in Abhängigkeit von einem relativen Drehwinkel zwischen dem ersten Element (200) und dem zweiten Element zu erzeugen (300),
wobei das viskose Material (400) mit dem ersten Element (200) und dem zweiten Element (300) an einer Position in Kontakt steht, die von der des Widerstandserzeugungsbereichs (130) verschieden ist.

4. Eingabevorrichtung (100) nach einem der Ansprüche 1 bis 3,
wobei das andere von dem ersten Element (200) und dem zweiten Element (300) eine zylindrische Spaltbildungs-Außenfläche (311) aufweist, wobei der Hülsenhaltebereich (236) eine zylindrische Halte-Innenfläche (237) aufweist, die außenseitig von der Spaltbildungs-Außenfläche (311) angeordnet ist,
wobei die Hülse (240, 640) eine zylindrische Halte-Außenfläche (243) aufweist, die mit dem inneren Bereich der Halte-Innenfläche (237) in Kontakt steht, und eine zylindrische Spaltbildungs-Innenfläche (642) aufweist, die außenseitig von der Spaltbildungs-Außenfläche (311) angeordnet ist, und wobei der Spalt zwischen der Spaltbildungs-Außenfläche (311) und der Spaltbildungs-Innenfläche (642) gebildet ist.

## Revendications

1. Dispositif d'entrée (100) qui englobe un premier élément (200) et un deuxième élément (300) et qui est configuré pour la mise en oeuvre d'une entrée en conformité avec une rotation relative entre le premier élément (200) et le deuxième élément (300), comprenant :
une portion faisant office de palier (121, 122) configurée pour supporter en rotation le premier élément (200) et le deuxième élément (300) ;
un espace libre formé entre le premier élément (200) et le deuxième élément (300) à un endroit différent de celui occupé par la portion faisant office de palier (121, 122) ; et
une matière visqueuse (400) qui est présente dans l'espace libre et qui entre en contact avec le premier élément (200) et avec le deuxième élément (300) ;
**caractérisé en ce qu'**un élément choisi parmi le premier élément (200) et le deuxième élément (300) englobe un manchon (240, 640) et une portion faisant office de maintien de manchon (236) configurée pour maintenir le manchon (240, 640) ; et
dans lequel l'autre élément choisi parmi le premier élément (200) et le deuxième élément (300), et le manchon (240, 640) forment l'espace libre.

2. Dispositif d'entrée (100) selon la revendication 1,
dans lequel une distance entre le premier élément (200) et le deuxième élément (300) dans l'espace libre est supérieure à une distance entre le premier élément (200) et le deuxième élément (300) dans la portion (121, 122) faisant office de palier.

3. Dispositif d'entrée (100) selon l'une quelconque des revendications 1 ou 2, comprenant en outre :
une portion génératrice d'une résistance (130) configurée pour générer une force de résistance en conformité avec un angle de rotation relatif entre le premier élément (200) et le deuxième élément (300) ;
dans lequel la matière visqueuse (400) entre en contact avec le premier élément (200) et le deuxième élément (300) à un endroit différent de celui correspondant à la portion génératrice d'une résistance (130).

4. Dispositif d'entrée (100) selon l'une quelconque des revendications 1 à 3,
dans lequel l'autre élément choisi parmi le premier élément (200) et le deuxième élément (300) englobe une surface externe de forme cylindrique (311) pour la formation d'un espace libre ;
dans lequel la portion faisant office de maintien de manchon (236) englobe une surface interne de maintien de forme cylindrique (237) qui est disposée à l'extérieur de la surface externe de forme cylindrique (311) pour la formation d'un espace libre ;
dans lequel le manchon (240, 640) englobe une surface externe de maintien de forme cylindrique (243) qui entre en contact avec la portion interne de la surface interne de maintien (237) et une surface interne de forme cylindrique (642) pour la formation d'un espace libre, qui est disposée à l'extérieur de la surface externe (311) pour la formation d'un espace libre ; et
dans lequel l'espace libre est formé entre la surface externe (311) pour la formation d'un espace libre et la surface interne (642) pour la formation d'un espace libre.
